# EUROPEAN PATENT SPECIFICATION

(11) **EP 2 569 837 B1**
(45) Date of publication and mention of the grant of the patent: **25.06.2014**
(21) Application number: 11720273.9
(22) Date of filing: 10.05.2011
(51) Int. Cl.: H02G 3/04

(54) **NON-WOVEN, SELF-WRAPPING THERMAL SLEEVE AND METHOD OF CONSTRUCTION THEREOF**
SELBSTWICKELNDE THERMISCHE VLIESHÜLLE UND VERFAHREN ZU IHRER HERSTELLUNG
MANCHON THERMIQUE AUTO-ENVELOPPANT NON TISSÉ ET PROCÉDÉ DE FABRICATION DUDIT MANCHON

(30) Priority: 10.05.2010 US 333019 P
(43) Date of publication of application: 20.03.2013
(60) Divisional application: 14165484.8
(73) Proprietor: Federal-Mogul Powertrain, Inc., Southfield, MI 48033 (US)
(72) Inventor: HARRIS, David, A., Coatesville, PA 19320 (US); STAUDT, Eric, K., Reading PA 19606 (US)
(74) Representative: Barker, Rosemary Anne
(86) International application number: PCT/US2011/035893
(87) International publication number: WO 2011/143193

(56) References cited:
- EP-A1- 1 564 321
- WO-A1-00/20201
- DE-U1- 29 910 987
- GB-A- 1 177 131
- GB-A- 2 195 673
- US-A- 5 178 923

## Description

### BACKGROUND OF THE INVENTION

### 1. Technical Field

This invention relates generally to sleeves for protecting elongate members, and more particularly to non-woven, self-wrapping sleeves and to their method of construction.

### 2. Related Art

It is known that wires and wire harnesses carried in sleeves in vehicles, such as in automobiles, aircraft or aerospace craft, can be exposed to potentially damaging radiant heat and can produce undesirable noise while the vehicle is in use. The noise typically stems from the wires or harnesses vibrating against the sleeve and/or adjacent components, wherein the vibration results from vibrating components in the vehicle, and in the case of automotive vehicles, movement of the vehicle over a ground surface. As such, it is customary to spirally wrap wires and wire harnesses with high temperature resistant foil tape and/or sound masking tape to reduce the potential for noise generation. Unfortunately, applying tape is labor intensive, and thus, costly. In addition, the appearance of the tape can be unsightly, particularly over time as the tape wears. Further, in service, tape can provide difficulties in readily accessing the wound wires.

Other than applying tape, it is known to incorporate heat and/or acoustic protection in the form of woven, braided or knitted fabric sleeves about the wires to reduce the potential for damage from heat and/or for noise generation. The respective sleeves are typically manufactured from heat resistant and noise suppressing materials, such as selected monofilament and texturized multifilament polyester yarns. The sleeves are either wrapped and fastened about the wires as in DE 29910987, or applied as a self wrapping sleeve construction. Further, it is known to provide non-woven sleeves having a non-woven layer and an outer reflective layer, wherein the sleeves are not self-wrappable, and are either wrapped and fastened about the wires with a secondary fastening device, or supplied as a tubular, non-wrappable sleeve. If wrapped and fastened, additional costs are incurred for the fasteners and in attaching the fasteners to the sleeves. Further, additional labor and/or processes are typically involved to secure the sleeves about the wires. In addition, the aforementioned sleeves are typically constructed of a uniform, homogenous construction, and thus, have a constant axial and radial stiffness/flexibility over their full length. As such, if the sleeve is constructed for extreme environments, thereby requiring a high degree of protection against heat and/or sound production, then the walls of the sleeves are constructed having an increased, thickness, and thus, the flexibility of the sleeve is diminished and the weight of the sleeve is increased. These are typically negative traits, particularly in applications requiring the sleeve to be routed around tight corners and having minimal weight. And thus, although these sleeves generally prove useful in providing protection against radiant heat and suppressing noise generation in use, they can be relatively costly to manufacture, with additional costs being incurred to attach fasteners to the sleeves and to secure the sleeves about the wires, and they can be relatively stiff and heavy.

A non-woven sleeve manufactured according to the present invention overcomes or greatly minimizes any limitations of the prior art described above, and also provides enhanced potential to withstand radiant heat and suppress noise generation by elongate members carried in the sleeves.

### SUMMARY OF THE INVENTION

One aspect of the invention provides a self-wrapping, non-woven thermal sleeve for routing and protecting elongate members from radiant heat and/or generating noise and vibration. The sleeve has an elongate, non-woven substrate with opposite sides that extend between opposite ends, with the opposite sides being self-wrapping about a central longitudinal axis to define a generally tubular cavity in which the elongate members are received. The opposite sides of the substrate are extendible away from one another under an externally applied force to allow the elongate members to be disposed radially into the cavity. Upon disposing the elongate members within the cavity, the external force is released, thereby allowing the opposite sides of the wall to return to their self-wrapped, tubular configuration. The substrate has a non-homogenous material composition providing first regions of a material and second regions of a material, wherein the material compositions of the first and second regions are different, thereby providing the first and second regions with different physical properties.

The first and second regions may have a different stiffness.

The first and second regions may have a different weight.

The first and second regions either extend transversely to the central longitudinal axis and circumferentially about the sleeve to provide longitudinally spaced regions of enhance flexibility, or they extend parallel to the central longitudinal axis between the opposite ends to provide the sleeve with strips of increased rigidity.

The non-woven material forming the substrate of the sleeve includes different compositions of thermoplastic fibers therein. The different compositions of thermoplastic fibers are spaced from one another to provide the substrate with a non-homogeneous material composition and, when subjected to a heat treatment, take on a heat-set configuration, thereby biasing the substrate to a self-curled memory position.

The thermoplastic fibers, which may be embedded or otherwise bonded to the non-woven material, may include low melt fibers mixed with standard thermoplastic fibers. The low melt fibers, when subjected to a heat treatment, take on a heat set configuration, thereby biasing the substrate to a self-curled memory position. The standard thermoplastic fibers act in part to provide the desired density and thickness to the substrate, as desired, thereby providing additional thermal protection and rigidity to the sleeve. The first region has a first wt% of low melt fibers and the second region has a second wt% of low melt fibers, wherein the first wt% is different from the second wt%. Accordingly, the substrate is constructed having first regions of one material composition and second regions of another material composition to provide the first and second regions with different physical properties, as desired.

The non-woven substrate has an outer surface facing away from the central longitudinal axis and a reflective layer may be attached to the outer surface.

The reflective layer may be provided as a foil laminate.

The low melt fibers may be encapsulated in the standard thermoplastic fibers.

According to another aspect of the invention, a method of constructing a non-woven sleeve for routing and protecting elongate members from radiant heat and/or generating noise and vibration is provided. The method includes: forming a wall of non-woven material; forming first regions in the wall from a first material; forming second regions in the wall from a second material different from the first material; and heat-setting the wall into the tubular configuration.

In accordance with either the invention, the method includes forming the first and second regions to extend transversely to the central longitudinal axis and circumferentially about the sleeve to provide longitudinally spaced regions of enhance flexibility, or forming the first and second regions to extend parallel to the central longitudinal axis between the opposite ends to provide the sleeve with strips of increased rigidity.

The method may include attaching a reflective layer to an outer surface of the wall.

### BRIEF DESCRIPTION OF THE DRAWINGS

These and other aspects, features and advantages of the invention will become readily apparent to those skilled in the art in view of the following detailed description of presently preferred embodiments and best mode, appended claims, and accompanying drawings, in which:
Figure 1 is a schematic perspective view of a non-woven, self-wrapping thermal sleeve constructed in accordance with one embodiment of the invention carrying and protecting elongate members therein;
Figure 2 is an enlarged schematic partial perspective view taken generally along the line 2-2 of Figure 1;
Figure 2A is a view similar to Figure 2 showing an outer reflective layer applied to the sleeve;
Figure 3 is a schematic perspective view of a non-woven, self-wrapping thermal sleeve constructed in accordance with another embodiment of the invention carrying and protecting elongate members therein;
Figure 4 is an enlarged schematic partial perspective view taken generally along the line 4-4 of Figure 3; and
Figure 4A is a view similar to Figure 4 showing an outer reflective layer applied to the sleeve;

### DETAILED DESCRIPTION OF PRESENTLY PREFERRED EMBODIMENTS

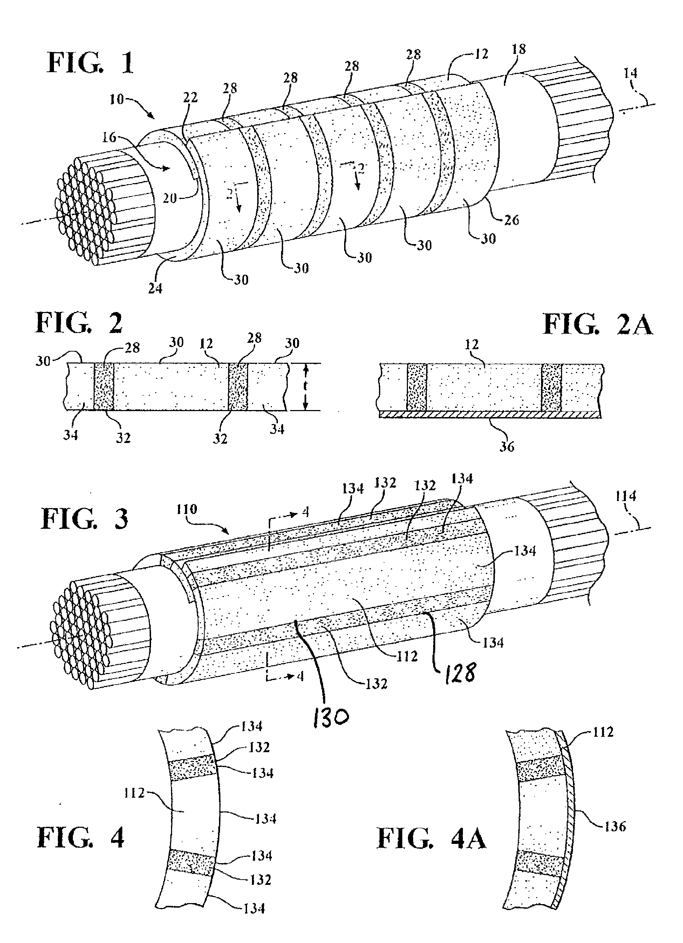

Referring in more detail to the drawings, Figure 1 shows a non-woven, self-wrapping protective thermal sleeve, referred to hereafter as sleeve 10, constructed in accordance with one aspect of the invention. The sleeve 10 has a non-woven substrate layer, referred to hereafter as wall 12, constructed from an engineered non-woven material. The wall 12 is heat-set to take on a self-wrapping tubular "cigarette-style" configuration about a central longitudinal axis 14 to provide an enclosed tubular inner cavity 16 when the wall 12 is in a relaxed state, free of externally applied forces. The cavity 16 is readily accessible along the axis 16 so that elongate members, such as a pipe, wires or a wire harness 18, for example, can be readily disposed radially into the cavity 16, and conversely, removed from the cavity 16, such as during service. The wall 12 can be constructed of any suitable size, including length, diameter and wall thickness, wherein the wall 12 has opposite sides 20, 22 that extend parallel or substantially parallel to the axis 14 between opposite ends 24, 26. The opposite sides 20, 22 are self-wrapping about the central longitudinal axis 14 to provide the cavity 16 in which the elongate members are received. The opposite sides 20, 22 of the wall 12 are extendible away from one another under an externally applied force to allow the elongate members to be disposed radially into the cavity. Upon disposing the elongate members within the cavity, the external force is released, thereby allowing the opposite sides 20, 22 of the wall 12 to return to their self-wrapped, tubular configuration. The wall 12 has a non-homogenous (discontinuous) material composition across its width and/or length providing first regions 28 of one non-woven material composition and second regions 30 of another non-woven material composition, wherein the first and second regions 28, 30 are intertwined together in the nonwoven process. Accordingly, the material compositions of the first and second regions 28, 30 are different, thereby providing the first and second regions 28, 30 of the wall 12 with different physical properties. The different physical properties provide the wall 12, by way of example, with regions of enhanced longitudinal flexibility, enhanced curling bias, enhanced hoop stiffness, enhanced axial stiffness and reduced weight, depending on the physical properties desired for the intended application. Accordingly, the wall 12 has non-uniform physical properties, as desired, to provide the wall with, for example enhanced self-curling and reduced weight.

The sleeve 10 can be constructed having any desired length and various finished wall thicknesses (t). The non-woven material forming the wall 12, constructed in accordance with one aspect of the invention, as best shown in Figures 2 and 2A, has low melt fibers, including either monofilaments and/or bi-component fibers, represented generally at 32. The low melt fibers 32 can be mixed with standard thermoplastic fibers, represented generally at 34, if desired, otherwise, the low melt fibers 32 can constitute the first regions 28 entirely. The low melt 32 at least partially melt at a temperature lower than the standard thermoplastic fibers 34 when heat treated in a heat-setting process and take on a heat-set configuration, thereby biasing the wall 12 into a heat set shape, represented as a self-curled memory tubular shape. If bi-component fibers are provided as low melt fibers 32, they can be provided having a core of a standard thermoplastic material, such as polyethylene terephthalate (PET), for example, with an outer sheath of polypropylene, polyethylene, or low melt polyester, for example. The standard thermoplastic fibers 34 can be provided as any thermoplastic fiber, such as nylon or PET, for example, and act in part to provide the desired density and thickness (t) to the wall 12, as desired, thereby providing additional thermal protection and rigidity to the sleeve 10, while also being relatively inexpensive compared to the heat-settable fibers 32. Accordingly, the substrate 12 is constructed having a suitable thickness and density of mechanically intertwined, or otherwise bonded, non-woven standard thermoplastic fibers 32 and low melt fibers 34 configured in discrete locations relative to one another as needed to obtain the desired physical properties, depending on the application, while also being self-curled, at least initially and prior to use, into a tubular shape.

The type, quantity, size and ratio of the low melt fibers 32 and standard thermoplastic fibers 34 of the non-woven substrate 12 can be varied, and thus selected to provide the sleeve 10 with the desired stiffness, springback bias of the heat set curl, hand (softness), thermal heat resistance, and substrate density and overall thickness (t). As such, depending on the application, the sleeve 10 can be constructed having a relatively small outer diameter, while still providing the cavity 16 with sufficient volume to contain a predetermined lateral cross-sectional area of wires. If the application is more severe, wherein the sleeve is exposed to extreme heat and/or debris, then the thickness (t) of the wall 12 can be increased, as desired. In addition, increasing the wall thickness (t) typically provides the sleeve 10 with more rigidity, and thus, larger cavities 16 can be constructed while still providing the sleeve 10 with adequate rigidity and strength to contain increased numbers and diameters of wire.

In addition, beyond varying the type, quantity, size and ratio of the low melt fibers 32 and/or standard thermoplastic fibers 34, the disbursement (precise location) of the low melt fibers 32 and standard thermoplastic fibers 34 relative to one another is controlled to provide the sleeve 10 with the desired performance characteristics demanded by the application. By way of example and without limitation, as shown in Figures 1 and 2, the wall 12 has the first regions 28 formed of low melt fibers 32 disbursed in circumferentially extending bands spaced axially from one another along the length of the sleeve 10. Accordingly, the bands of low melt material 32, upon being heat-shaped, provide the sleeve 10 with its self-curling bias, while also providing increased hoop strength regions to enhance the crush strength of the sleeve 10. As mentioned, the circumferential bands of low melt material 32 can incorporate standard thermoplastic fibers 34 as well, thereby providing the discrete bands with a predetermined ratio of low melt fibers 32 to standard fibers 34, as desired. The circumferential bands of low melt material 32, along with standard fibers 34 if incorporated, are spaced from axially from one another by the second regions 30 formed purely of the standard thermoplastic fibers 34. As such, the standard thermoplastic fiber second regions 30 provide a material content that is less costly than the low melt first regions 28, while also providing the sleeve 10 with an overall reduced weight from a sleeve having low melt fibers uniformly throughout. With the circumferentially extending low melt first regions 28 and standard thermoplastic fiber second regions 30 alternating with one another, the sleeve 10 is provided enhance longitudinal flex points coinciding with the standard thermoplastic fiber second regions 30. As such, depending on the application requirements, the second regions 30 of standard fiber 34 can be provided having any desired axial length to provide the sleeve 10 with the necessary flexibility.

In addition to varying the content of low melt fibers 32 versus standard thermoplastic fibers 34, the type and content of the low melt fibers 32 can be varied throughout the wall 12, as desired, thereby changing the physical properties of the sleeve 10. For example, the low melt bi-component fibers can be provided having different material compositions in different regions of the sleeve 10. In one region of the sleeve 10, the low melt bi-component fibers 32 can have a reduced relative percentage of low melt outer sheath material and an increased relative percentage of standard thermoplastic fiber core material, e.g., 10% sheath and 90% core, while in another region of the sleeve 10 the bi-component fibers 32 can have an increased relative percentage of low melt outer sheath material and a decreased relative percentage of standard thermoplastic fiber core material, e.g., 30% sheath and 70% core. Further yet, the size, i.e. staple length and diameter or denier, of the low melt fibers 32 can be varied to provide the sleeve 10 with the desired physical properties over its length. For example, in one region, the low melt fibers 32 could have a staple length of 2" and a 4 denier, while in another region, the low melt fibers 32 could have a staple length of 3" and a 10 denier. Further yet, the ratio of the low melt fibers 32 relative to the standard thermoplastic fibers 34 within each of the aforementioned regions can be different. By changing the specification of the low melt fibers 32 from one region of the sleeve 10 to another region, the sleeve 10 can attain an optimal self-curling memory, flexibility and stiffness, while also being economical in manufacture.

According to a further aspect of the invention, the aforementioned physical properties of the sleeve 10 can be provided by controlling the orientation of the fibers 32 within the wall 12 of the sleeve 10. For example, the fibers 32 can be combed or otherwise oriented in manufacture of the wall 12 to extend the fibers 32 in a predetermined, strategic pattern. For example, to enhance the longitudinal stiffness of the sleeve 10, the fibers 32 can be configured to extend along the axis 14 in a lengthwise direction of the sleeve 10. In contrast, if enhanced hoop strength is desired, the fibers 32 can be configured to extend transversely to the axis 14 in a widthwise (weft) direction of the sleeve 10, which in turn, could provide discrete flex locations along the length of the sleeve 10, while also providing the sleeve 10 with enhanced roundness, anti-kinking ability and improved self-curling memory. Of course, depending on the application, a single sleeve constructed in accordance with the invention could have separate axially extending portions, including one or more axial portions with the fibers 32 extending in one direction and one or more axial portions with the fibers 32 extending in a different direction. Accordingly, a single sleeve 10 can be provided having different physical properties over discrete axially extending portions, as desired.

As shown in Figures 3 and 4, a sleeve 110 constructed in accordance with another aspect of the invention is shown, wherein the same reference numerals, offset by a factor of 100, are used to identify similar features described above. Rather than the sleeve 110 having a wall 112 with circumferentially extending bands of low melt fibers 132, the wall 112 has longitudinally extending first regions 128 of bands, also referred to as strips, of low melt fibers 132 and longitudinally extending second regions 130 of bands, also referred to as strips, of standard thermoplastic material, e.g. PET. The low melt fibers 132 can be combined with standard thermoplastic fibers 134 in the strips of first regions 128, as discussed above, to provide the desired ratio and composition necessary to provide the sleeve 110 with the sought after physical properties. By having the strips extend along the length of the sleeve 110 generally parallel to a longitudinal, central axis 114, the sleeve 110 is provided with an increased longitudinal rigidity. As such, the sleeve 110 is less inclined to sag over unsupported portions of its length. The axially extending strips containing the low melt fibers 132 are circumferentially spaced from one another by the axially extending strips of the second regions 130 formed entirely of standard thermoplastic fibers 134, thereby reducing the weight and manufacturing cost of the sleeve 110 in comparison to a sleeve constructed entirely of low melt and/or bicomponent fibers. Other than the direction of the strips extending parallel to the longitudinal axis 114, the structure and manufacture of the sleeve 110 is generally the same as discussed above.

In Figures 2A and 4A, another aspect of the invention is shown wherein an outermost reflective layer 36, 136 can be attached to the wall 12, 112 of the sleeve 10, 112, respectively. The reflective layer 36, 136 can be provided having the same width and length as the wall 12, 112 and thus, can cover or substantially cover the entire outer surface of the wall 12, 112, thereby leaving no exposed areas of the wall outer surface to the outside environment. The reflective layer 36, 136 can be provided as a film/foil laminate, such as 1/3mil foil-laminating adhesive-1/2mil metallized PET film, for example. As such, the foil provides reflectivity and the PET film provides durability in use. Otherwise, other reflective materials could be used, including a single metal foil layer, for example. The reflective layer 36, 136 can be attached to the wall 12, 112 in any suitable fashion, such as by any suitable adhesive, including heatseals or an intermediate pressure sensitive adhesive, for example. The reflective layer 36, 136 provides enhanced thermal protection to the wires 18 and can also facilitate maintaining the sleeve 10, 110 in its wrapped tubular configuration about the wires 18 in use.

It is to be understood that other embodiments of the invention which accomplish the same function are incorporated herein within the scope of any ultimately allowed patent claims.

## Claims

1. A self-wrapping, non-woven sleeve (10; 110) for routing and protecting elongate members (18), comprising an elongate non-woven wall (12; 112) having opposite sides (20, 22) extending along a longitudinal axis (14; 114) of said sleeve (10; 110) said sides (20; 22) being self-wrapped about said longitudinal axis to provide a tubular cavity (16) in absence of an externally applied force, said sides (20, 22) being extendable away from one another under an externally applied force to expose said cavity (16) for insertion of the elongate members (18), said sides (20; 22) returning to their self-wrapped configuration upon removal of the externally applied force,
said wall having discrete first regions (28; 128) of a material and discrete second regions (30; 130) of a material, said first and second regions of material being different, **characterized in that** said first regions (28; 128) of material include low-melt fibers (32; 132) blended in said non-woven wall (12; 112) and said second regions (30; 130) include standard thermoplastic fibers (34; 134) blended in said non-woven wall, (12, 112) **and in that** said first regions (28) form discrete bands spaced axially from one another, said bands extending substantially transversely to said longitudinal axis (14; 114), or said first regions (128) form discrete bands spaced circumferentially from one another, said bands extending substantially parallel to said longitudinal axis (14; 114), so as to provide said wall (12; 112) with non-uniform physical properties.

2. A sleeve (10; 110) according to claim 1 wherein said low melt fibers are polypropylene.

3. A sleeve (10; 110) according to claim 1 wherein said standard thermoplastic fibers are PET.

4. A sleeve (10; 110) according to claim 1, 2 or 3 wherein an outermost reflective layer (36; 136) is attached to the wall (12; 112).

5. A method of constructing a non-woven sleeve (10; 110) for routing and protecting elongate members (18) from radiant heat and/or generating noise and vibration, comprising:
forming a wall (12; 112) of non-woven material;
forming first regions (28; 128) in the wall (12; 112) from a first material;
forming second regions (30; 130) in the wall (12; 112) from a second material different from the first material; and
heat-setting the wall into tubular configuration, **characterized by** forming the first regions (28; 128) by blending low-melt fibers in the non-woven wall (12; 112) and forming the second regions (30; 130) by blending standard thermoplastic fibers in the non-woven wall (12; 112), and by forming the first regions (28; 128) as discrete bands spaced axially from one another and extending substantially transversely to the longitudinal axis or by forming the first regions (28; 128) as discrete bands spaced circumferentially from one another and extending substantially parallel to the longitudinal axis.

6. A method according to claim 5 further including providing the low-melt fibers as polypropylene.

7. A method according to claim 5 or 6 further including providing the standard thermoplastic fibers as PET.

## Patentansprüche

1. Selbstwickelnde Vlieshülle (10; 110) zum Routen und Schützen von langgestreckten Teilen (18), die umfasst: eine langgestreckte Vlieswand (12; 112), die über gegenüberliegende Seiten (20, 22) verfügt, die sich entlang einer Längsachse (14; 114) der Hülle (10; 110) erstrecken, wobei die Seiten (20; 22) um die Längsachse selbstgewickelt sind, um in Abwesenheit einer extern angewendeten Kraft einen röhrenförmigen Hohlraum (16) zur Verfügung zu stellen, wobei die Seiten (20; 22) unter einer extern angewendeten Kraft voneinander weg ausziehbar sind, um den Hohlraum (16) zum Einsetzen der langgestreckten Teile (18) zu exponieren, wobei die Seiten (20; 22) nach einem Entfernen der extern angewendeten Kraft in ihre selbstgewickelte Konfiguration zurückkehren,
wobei die Wand über diskrete erste Bereiche (28; 128) eines Materials und diskrete zweite Bereiche (30; 130) eines Materials verfügt, wobei die ersten und zweiten Bereiche eines Materials verschieden sind,
**dadurch gekennzeichnet, dass** erste Bereiche (28; 128) eines Materials Fasern mit niedrigem Schmelzpunkt (32; 132) umfassen, die in der Vlieswand (12; 112) verschmolzen sind, und die zweiten Bereiche (30; 130) thermoplastische Standardfasern (34; 134) umfassen, die in der Vlieswand (12; 112) verschmolzen sind, und dadurch, dass erste Bereiche (28) diskrete Bänder bilden, die axial mit Abstand voneinander angeordnet sind, wobei sich die Bänder im Wesentlichen quer zu der Längsachse (14; 114) erstrecken, oder die ersten Bereiche (128) diskrete Bänder bilden, die umlaufend mit Abstand voneinander angeordnet sind, wobei sich die Bänder im Wesentlichen parallel zu der Längsachse (14; 114) erstrecken, um so die Wand (12; 112) mit uneinheitlichen physikalischen Eigenschaften auszustatten.

2. Hülle (10; 110) gemäß Anspruch 1, wobei die Fasern mit niedrigem Schmelzpunkt Polypropylenfasern sind.

3. Hülle (10; 110) gemäß Anspruch 1, wobei die thermoplastischen Standardfasern PET-Fasern sind.

4. Hülle (10; 110) gemäß Anspruch 1, 2 oder 3, wobei die äußerste reflektierende Schicht (36; 136) an der Wand (12; 112) befestigt ist.

5. Verfahren zur Herstellung einer Vlieshülle (10; 110) zum Routen und Schützen von langgestreckten Teilen (18) vor Strahlungswärme und/oder einem Erzeugen von Lärm und Vibration, das umfasst:
Bilden einer Wand (12; 112) aus einem Vliesmaterial;
Bilden von ersten Bereichen (28; 128) in der Wand (12; 112) aus einem ersten Material;
Bilden von zweiten Bereichen (30; 130) in der Wand (12; 112) aus einem zweiten Material, das von dem ersten Material verschieden ist; und
Thermofixieren der Wand in eine röhrenförmige Konfiguration, **gekennzeichnet durch** Bilden der ersten Bereiche (28; 128) **durch** Einschmelzen von Fasern mit niedrigem Schmelzpunkt in die Vlieswand (12; 112) und Bilden der zweiten Bereiche (30; 130) **durch** Einschmelzen thermoplastischer Standardfasern in die Vlieswand (12; 112), und **durch** Bilden der ersten Bereiche (28; 128) als diskrete Bänder, die axial mit Abstand voneinander angeordnet sind und sich im Wesentlichen quer zu der Längsachse erstrecken, oder **durch** Bilden der ersten Bereiche (28; 128) als diskrete Bänder, die umlaufend mit Abstand voneinander angeordnet sind und sich im Wesentlichen parallel zu der Längsachse erstrecken.

6. Verfahren gemäß Anspruch 5, das weiterhin umfasst: Bereitstellen der Fasern mit niedrigem Schmelzpunkt als Polypropylenfasern.

7. Verfahren gemäß Anspruch 5 oder 6, das weiterhin umfasst: Bereitstellen der thermoplastischen Standardfasern als PET-Fasern.

## Revendications

1. Manchon non tissé auto-enroulant (10 ; 110) pour acheminer et protéger des éléments allongés (18), comprenant une paroi non tissée allongée (12 ; 112) ayant des côtés opposés (20, 22) s'étendant le long d'un axe longitudinal (14 ; 114) dudit manchon (10 ; 110), lesdits côtés (20 ; 22) s'enroulant automatiquement autour dudit axe longitudinal pour fournir une cavité tubulaire (16) en l'absence d'une force appliquée extérieurement, lesdits côtés (20 ; 22) pouvant s'étendre à distance l'un de l'autre sous une force appliquée extérieurement afin d'exposer ladite cavité (16) pour l'insertion des éléments allongés (18), lesdits côtés (20 ; 22) revenant à leur configuration auto-enroulée suite à la suppression de la force appliquée extérieurement,
ladite paroi ayant des premières régions distinctes (28 ; 128) réalisées avec un matériau et des secondes régions distinctes (30 ; 130) réalisées avec un matériau, lesdites premières et secondes régions de matériau étant différentes, **caractérisé en ce que** lesdites premières régions (28 ; 128) réalisées avec un matériau comprennent des fibres à faible point de fusion (32 ; 132) mélangées dans ladite paroi non tissée (12 ; 112) et lesdites secondes régions (30 ; 130) comprennent des fibres thermoplastiques (34 ; 134) standard mélangées dans ladite paroi non tissée (12 ; 112) ; et **en ce que** lesdites premières régions (28) forment des bandes distinctes espacées de manière axiale les unes par rapport aux autres, lesdites bandes s'étendant sensiblement transversalement par rapport audit axe longitudinal (14 ; 114), ou lesdites premières régions (128) forment des bandes distinctes espacées de manière circonférentielle les unes des autres, lesdites bandes s'étendant sensiblement parallèlement audit axe longitudinal (14 ; 114) afin de pourvoir ladite paroi (12 ; 112) de propriétés physiques non uniformes.

2. Manchon (10 ; 110) selon la revendication 1, dans lequel lesdites fibres à faible point de fusion sont du polypropylène.

3. Manchon (10 ; 110) selon la revendication 1, dans lequel lesdites fibres thermoplastiques standard sont du PET.

4. Manchon (10 ; 110) selon la revendication 1, 2 ou 3, dans lequel une couche réfléchissante située le plus à l'extérieur (36 ; 136) est fixée à la paroi (12 ; 112).

5. Procédé pour construire un manchon non tissé (10 ; 110) pour acheminer et protéger des éléments allongés (18) de la chaleur rayonnante et/ou de la génération de bruit et de vibration, comprend les étapes consistant à :
former une paroi (12 ; 112) en matériau non tissé ;
former des premières régions (28 ; 128) dans la paroi (12 ; 112) à partir d'un premier matériau ;
former des secondes régions (30 ; 130) dans la paroi (12 ; 112) à partir d'un second matériau différent du premier matériau ; et
thermofixer la paroi en configuration tubulaire, **caractérisé par** les étapes consistant à former les premières régions (28 ; 128) en mélangeant des fibres à faible point de fusion dans la paroi non tissée (12 ; 112) et former les secondes régions (30 ; 130) en mélangeant des fibres thermoplastiques standard dans la paroi non tissée (12 ; 112), et former les premières régions (28 ; 128) sous forme de bandes distinctes espacées de manière axiale les unes par rapport aux autres et s'étendant de manière sensiblement transversale par rapport à l'axe longitudinal ou former les premières régions (28 ; 128) sous forme de bandes distinctes espacées de manière circonférentielle les unes par rapport aux autres et s'étendant sensiblement parallèlement à l'axe longitudinal.

6. Procédé selon la revendication 5, comprenant en outre l'étape consistant à prévoir les fibres à faible point de fusion sous forme de polypropylène.

7. Procédé selon la revendication 5 ou 6, comprenant en outre l'étape consistant à prévoir les fibres thermoplastiques standard sous forme de PET.
